# EUROPEAN PATENT APPLICATION

(11) **EP 2 023 111 A2**
(43) Date of publication of application: **11.02.2009**
(21) Application number: 08013837.3
(22) Date of filing: 01.08.2008
(51) Int. Cl.: G01L 5/00, E01F 7/04

(54) **Measuring device for stress detection on a protection barrier and protection barrier having such measuring device**

(30) Priority: 03.08.2007 IT VI20070217
(71) Applicant: Consorzio Triveneto Rocciatori Scarl, 32030 Fonzaso (Belluno) (IT)
(72) Inventor: Attilio, Aminta, 32032 Feltre (Belluno) (IT)
(74) Representative: O'Byrne, Daniel Joseph

(57) **Abstract**

A measuring device for detecting impact stresses on a protection barrier (B), wherein the barrier (B) comprises a plurality of posts (M) adapted to support at least one substantially flexible retainer element (R) for collecting falling material, and wherein each post (M) is designed to be associated with at least one foundation (F) for anchorage to a stationary support (S). Each post (M) is equipped with at least one interface element (2) designed to be anchored to the upper end (3) of the foundation (F) and to the lower end (4) of the post (M), and first detection means (5, 105) associated with the interface element (2) for measuring the compressive/tractive forces acting on the post (M) in a substantially axial direction. Second detection means (6, 106) are associated with the interface element (2) for measuring the shear stresses acting on the post (M) in a substantially transverse direction, as well as means for collecting data from the first (5; 105) and second (6; 106) detection means, for instantaneous detection of the multi-axial stress state of the corresponding post (M) upon impact.

## Description

### Field of invention

The present invention is generally directed to the art of land protection and particularly relates to a device for measuring the stress state of a rock fall, debris flow, avalanche, snow slide, and the like, protection barrier.

The present invention also relates to a protection barrier having such a device.

### Background of the invention

Barriers are known to be used in a number of situations for protecting persons and things from danger.

For example, fencing barriers are used in sports facilities to delimit sectors for the public, e.g. for preventing contact between groups of spectators or, in the case of elevated sectors, for preventing people from falling down to the underlying zones.

Another example are the guardrails placed along the roads to prevent vehicles from veering off the roadway and from endangering the life of passengers of those and other vehicles.

A particular barrier is the "rock fall protection" barrier, which is designed to protect persons and things from debris flow, snow slides, avalanches, or the like.

This kind of barrier is installed at slopes or steep cliffs susceptible to movements of various materials, such as rocks, snow, ice or other, next to roads or houses, for person and house protection.

For simplicity, as used herein, the term "protection barriers" shall be intended to designate rock fall protection barriers.

In all the above examples, and particularly in protection barriers, resistance to external stresses is a key feature. This feature obviously depends both on materials and on structure and construction, as well as on the associated design parameters.

Protection barriers are generally composed of a plurality of posts secured to the ground by foundations, with material holding and collecting elements, typically nets, subtended therebetween.

The nets collect the materials that fall from the cliff and transfer stresses to the posts. It will be easily understood that the barrier is particularly subjected to stresses at the connection or interface element between each post and its foundation. Therefore, barrier design shall carefully account for any stress that might act on such element, for proper dimensioning of all barrier parts.

Once the barrier has been designed, it shall undergo a crash test to check its resistance and response to stresses. Here again, a critical aspect is proper sizing of the interface elements between the posts and the foundations of the barrier, through which the stresses that act on the barrier are transferred to the ground. These interface elements are exposed to failure more than any other barrier component, because they are subjected to a complex stress state, including tractive, compressive and shear forces.

In a known test method, the protection barrier to be tested is installed on a particular land and a natural event is generated to put it under stress. Correct design of the barrier is confirmed by checking the mechanical resistance of all barrier parts, and particularly the interface elements.

An additional final check is carried out after barrier installation, and includes static and dynamic tests to certify installation.

While this method provides a high degree of safety in terms of ensuring resistance of protection barriers to stressing events, it still has the recognized drawback of being empirical and hence of lacking precision.

Sizing is based on assumptions and cannot be precise, such assumptions being only confirmed after impact, static and dynamic tests after installation.

If assumptions are not confirmed, there will be the additional drawback of changing the design and installing the barrier anew, with consequent time and money losses.

In any case, a merely theoretical and not practical knowledge of the magnitude and type of forces acting on the barrier involves the risk that the barrier is not adequately designed in terms of both sizes and materials.

In an attempt to obviate the above drawbacks, impact test devices have been developed, which are disclosed, for instance, in patents GB 2 091 888, GB 2 250 825 and GB 1 370 530.

Particularly, these documents disclose similar devices, having a substantially longitudinal extension and mounted between a point of the barrier and the ground. As they are operated, they exert impactsimulating forces on the barrier and then remove such forces. This will allow measurement of the flexibility and springback of the barrier. These devices are particularly suitable for testing barriers of the type that is used in sports facilities, because the force applied thereby correctly simulates the behavior of crowds pressing onto the barrier.

The devices as disclosed in the first and second documents GB 2 250 825 and GB 2 091 888, unlike the device of the third document GB 1 370 530, detect not only linear displacement, but also the tilt imparted to the barrier. Furthermore, these known devices are connected to a computer which collects and supplies all crash test results.

While these prior art devices successfully serve their function, they still suffer from certain apparent drawbacks.

A first drawback is that they do not measure barrier response at the most problematic point, i.e. at the interface elements between the posts and the foundations, but in a different point, i.e. where the test force is applied, wherefore they do not provide direct measurement of the compressive and shear forces acting on the interface elements, whose value is critical because they directly cause structural failure of the interface elements.

Another drawback is that these prior art devices do not allow actual measurement of the possible real forces which may act on the barrier, but simply apply a force to the barrier according to advanced assumptions made during test planning, whereby they make the test even more dependent on the correctness of such assumptions.

A further drawback is that the forces transferred to the interface elements and, through them, to the foundations are calculated in a necessarily approximate manner, due to the complexity of the barrier structure.

Yet another drawback is that these devices are not easily usable for crash tests on a rock fall protection barrier, because the stress exerted on the known devices by a rockfall, for example, do not remain constant with time.

Also, these devices measure forces in one direction only, i.e. the one defined by their substantially longitudinal extension. Therefore, the compressive/tractive and shear forces that act on foundations cannot be determined, and not even derived by calculations. Thus, dynamic analysis can only be completed by performing multiple crash tests, with the measuring devices located each time in a different position.

Devices are also known which experimentally detect the tractive forces acting on the protection barrier ropes. These devices have load cells interposed between the ropes and respective anchor points.

One drawback of this known embodiment is that it allows neither direct measurement of the forces exerted on the bases of the barrier posts, nor simultaneous detection of the compressive/tractive and shear forces.

### Summary of the invention

The object of this invention is to obviate the above drawbacks, by providing a measuring device for detecting stresses on a protection barrier that is highly efficient and relatively cost-effective.

A particular object is to provide a protection barrier that allows direct measurement of the forces acting on the interface elements between the barrier posts and the foundations.

A further object of the present invention is to provide a measuring device for detecting stresses on a protection barrier that allows simultaneous measurement of all the real forces that act on the interface elements, namely the shear forces and the compressive/tractive forces.

These and other objects, as better explained hereafter, are fulfilled by a measuring device for detecting stresses on a protection barrier as defined in the main claim, which is applicable to a barrier comprising a plurality of posts adapted to support at least one substantially flexible retainer element for collecting falling material, and wherein each post is designed to be associated with at least one foundation for anchorage to a stationary support, characterized in that it comprises, for each longitudinal axis-defining post, at least one interface element, which is designed to be anchored to the upper end of the foundation and to the lower end of the post, first detection means being associated with said interface element for measuring the compressive/tractive forces acting on the post in a substantially axial direction, second detection means being associated with said interface element for measuring the shear stresses acting on the post in a substantially transverse direction and means for collecting data from said first and said second detection means, for instantaneous detection of the multi-axial stress state of the corresponding post upon impact.

By this arrangement, the compressive/tractive and shear forces that act on the foundations can be directly measured.

Preferably, the interface element comprises at least one first plate designed to be anchored to the lower end of the post and a plurality of attachment bars integral with the foundation, with their free ends interacting with the first plate to hold it in abutment position against the foundation.

Conveniently, the first connection means include a second plate extending in a plane substantially parallel to that of said first plate and rigidly fastened to the post by screw means or the like.

The first and second plates are mutually coupled by first attachment means, which are adapted to allow said first and said second plates to move towards/away from each other to a predetermined extent in an axial direction, substantially orthogonal to said plates, said first detection means being interposed between said first and said second plates.

The interface element also includes at least one third plate, which is held against the foundation by a plurality of attachment bars and has second junction means for connecting it to the first plate.

The first detection means are associated with the first plate and the second detection means are associated with the third plate.

Thus, the interposition of the first detection means between the first and the third plates allows measurement of the tractive/compressive forces acting on the foundations and the interface element.

According to another aspect of the invention, the first plate has a plurality of through holes designed for engagement with the free ends of respective attachment bars to allow movements of predetermined amplitude in any direction over the plane defined by the first plate.

Furthermore, the second junction means that connect the first plate to a third plate consist of one or more metal bars having a first end attached to the first plate by screw means and the second end attached to the third plate with the second detection means interposed therebetween.

Thus, since the third plate is integral with the stationary support, the shear stresses acting on the foundations and the interface element cause the first plate to be displaced to an extent that can be measured by the second detection means.

According to a possible variant of the invention, the first plate and the second plate have a fourth plate interposed therebetween.

The latter is associated with the second plate via attachment means allowing the plates to only move towards/away from each other in a direction orthogonal to any one of the planes defined thereby and to a predetermined extent.

Also, the fourth plate is associated with the first plate via third attachment means, which are designed to allow mutual movements of the plates to a predetermined extent in any direction over any one of the planes defined by such first and fourth plates.

Particularly, in this variant the first detection means are interposed between the second and the fourth plates and the second detection means are associated with the first plate, without limitation to any other different arrangement.

This advantageously allows simultaneous detection of the tractive/compressive and shear stresses that act on the foundations and the interface element without the provision of third plates, with reduced installation complexity and space requirements.

The above mentioned objects are also fulfilled by a protection barrier comprising one or more posts adapted to support at least one substantially flexible element for retaining falling material, and wherein each post is designed to be associated with at least one foundation for anchorage to a stationary support, characterized in that at least one of these posts comprises at least one device for detecting multi-axial stresses as claimed in one or more of the preceding claims.

With this configuration, the barrier can be continuously monitored during use and not only during the crash test.

### Brief description of the drawings

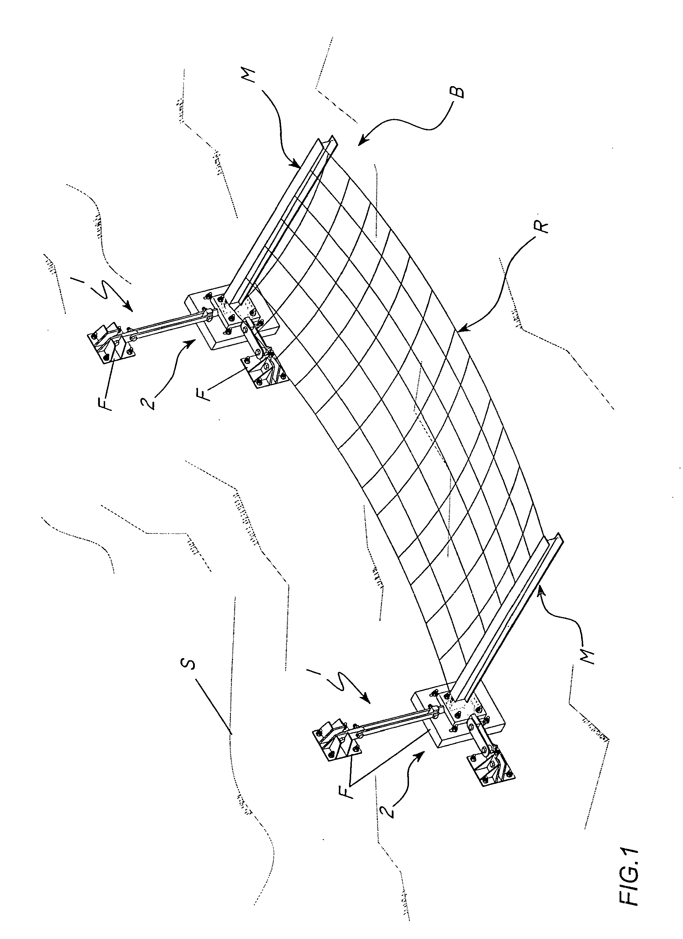

FIG. 1 shows a rock fall protection barrier having a measuring device of the invention;
FIG. 2 is an axonometric view of a detail of the device of the invention;
FIG. 3 is an axonometric exploded view of the detail of FIG. 2;
FIG. 4 is an axonometric exploded view of a variant embodiment of a detail of the device of the invention;
FIG. 5 is a different exploded view of the detail of FIG. 3.

### Detailed description of a preferred embodiment

Referring to above figures, there is shown a measuring device for detecting stresses on a protection barrier, generally designated by numeral 1, for use on a rock fall, debris flow, avalanche, snow slide, and the like, protection barrier B.

The barrier B typically has one or more posts M, which are adapted to support at least one substantially flexible retaining element, such as a ring nets or wire meshes. Each post M, extending in an axial direction, may be anchored to a stationary support S, typically the ground or a rock, via a foundation F.

In the illustrated embodiment, which is intended by way of example and without limitation, the stationary support S is substantially vertical and the posts are substantially horizontal.

According to the invention, the measuring device 1 requires at least one of the posts M of the barrier B to be equipped with an interface element 2, as described below in greater detail, which is designed to be anchored to the upper end 3 of the foundation F and to the lower end 4 of the post M.

First detection means 5 are associated with the interface element 2 of each post M, for measuring compressive/tractive forces acting on the post in a substantially axial direction and for transducing such forces into corresponding first data.

Second detection means 6 are associated with the same interface element, for measuring shear forces acting on the same post M in a substantially transverse direction and for transducing such forces into second data.

The measuring device 1 further includes data collection means, not shown, for collecting the first and second data transmitted by respective detection means 5, 6.

By this arrangement, the measuring device will allow instantaneous detection of the multi-axial stress state, including the compressive/tractive and shear forces that act on the foundation F of at least one post M of the protection barrier B during impact tests or the like.

Preferably, each interface element 2 comprises at least one substantially planar first plate 10 that defines a lying plane, and first connection means 11 at one end of the post M, which are in contact with the foundation F.

A plurality of attachment bars 14 are at least partially introduced in the foundation F and have free ends 15 interacting with the first plate 10 to anchor the latter to the foundation F in contact therewith.

Conveniently, the first connection means 11 may consist of a second plate 18 substantially facing towards and parallel to the first plate 10 and mechanically attached to the end of the post M by screw means.

The first plate 10 and the second plate 18 are mutually coupled via first attachment means 19 which are adapted to allow them to move towards/away from each other in a direction substantially orthogonal to the lying plane of the plates 10, 18 and to a predetermined extent.

A possible embodiment of the first attachment means 19, as described merely by way of illustration and without limitation, comprises one or more anchored pins 20 projecting from the first plate 10 and having threaded ends inserted in respective through holes 21 in the second plate 18.

The attachment means 19 further include nuts 22 designed for engagement with the ends of the projecting pins 20 and elastic means, not shown, interposed between the first 10 and the second 18 plates to elastically counteract said axial movement of said plates towards/away from each other.

The first detection means 5 are interposed between the first 10 and the second 18 plates to detect their mutual axial movement damped by the elastic means, and hence the tractive/compressive forces.

For this purpose, the first plate 10 has a cavity or through hole 25 for at least partly accommodating the first detection means 5 and avoid any interference with the first detection means 5, and prevent them from being crushed or damaged.

In the particular embodiment of the figures, the detection means 5 include a single sensor located at the center of the first 10 and second 18 plates, for detecting substantially symmetrical tractive forces.

Obviously, the detection means 5 may include more sensors, e.g. located at the corners of the plate 18, to allow detection of possibly asymmetrical tractive/compressive forces.

In the embodiment of the figures, the interface element 2 has at least one third plate 12 for detection of shear forces, which is held in contact with the foundation F by the attachment bars 14 and has second connection means 13 for connection to the first plate 10.

For this purpose, the first plate 10 has a plurality of through holes 26 for receiving the free threaded ends 15 of the attachment bars 14 to allow the first plate 10 to transversely move to a predetermined extent in any direction parallel to its extension plane.

The second connection means 13 may consist, for instance, of a pair of connecting rods 27 having first ends attached to the first plate 10 by screw means and second ends attached to the third plate 12 with the interposition of the second detection means 6.

The third plate 12 is stationary and anchored to the support S via the attachment bars 14.

The arrangement of the first plate, the third plates 12, and the second detection means 6, allow detection of shear forces. These forces cause the first plate 10 to move transverse to the stationary support S thanks to the interaction with the attachment bars 14.

The transverse motion of the first plate 10 relative to the third plate 12 will cause a swinging motion of the connecting rods 27, which will be detected by the sensor of the second detection means 6 designed to detect and measure the shear stresses.

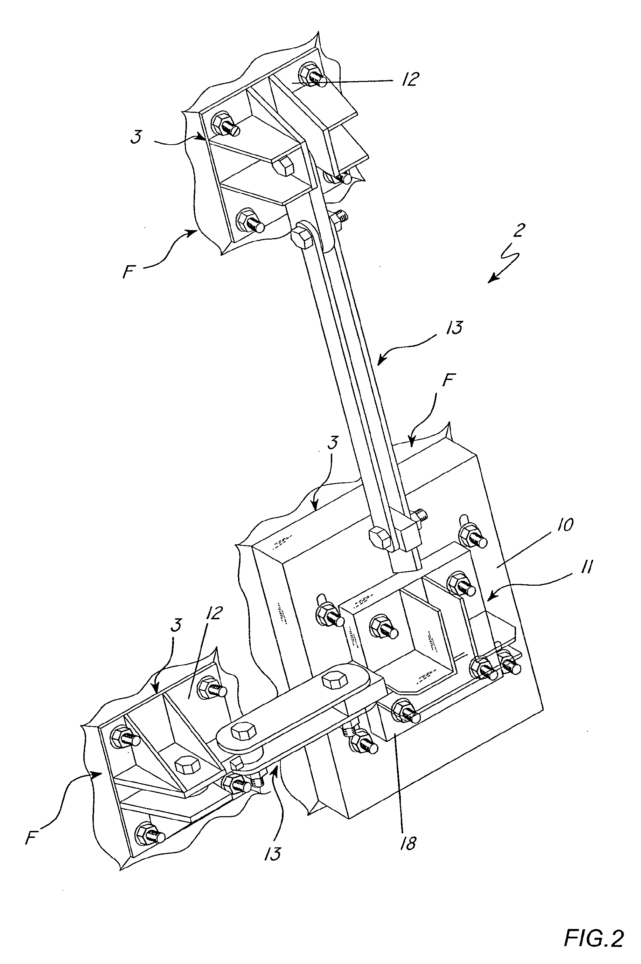

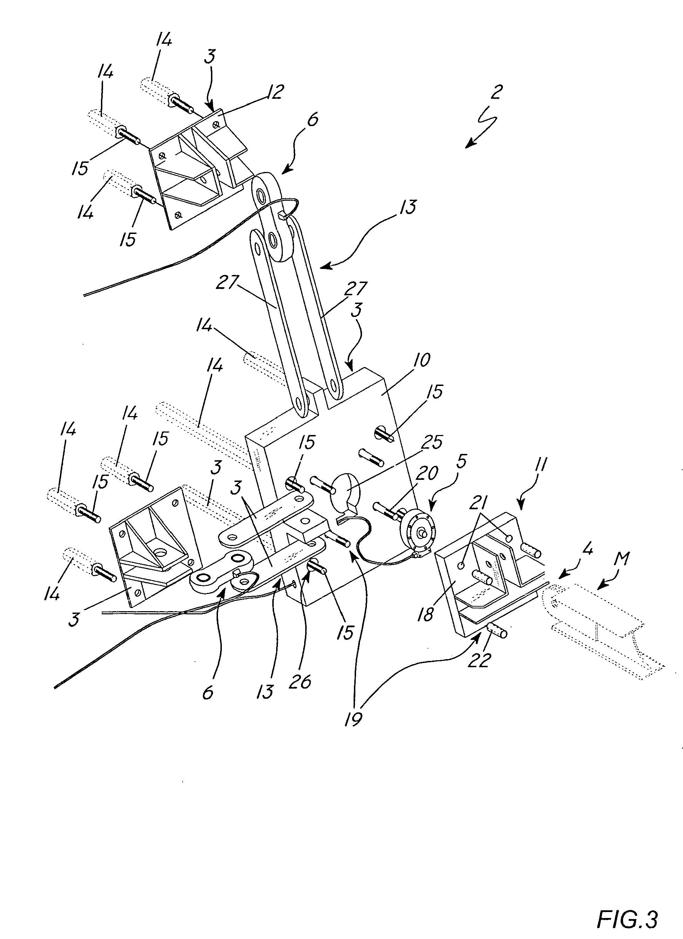

Referring to the embodiment as shown in FIGS. 2 and 3, the interface element 2 has one first plate 10 and two third plates 12. Particularly, their respective connecting rods 27 extend in mutually orthogonal directions. Therefore, their respective detection means 6, which also extend in mutually orthogonal directions, may detect shear forces in any direction over the extension plane of the first plate 10.

This allows simultaneous detection of compressive/tractive forces and shear forces in any direction of extension.

It shall be understood that alternative embodiments, not shown, may be envisaged, in which the third plates 12 may be replaced by any other type of anchorage integral with the stationary support S.

Furthermore, alternative variants may be also provided in which the number and arrangement of the first and third plates may be other than those described above, without departure from the scope of the invention.

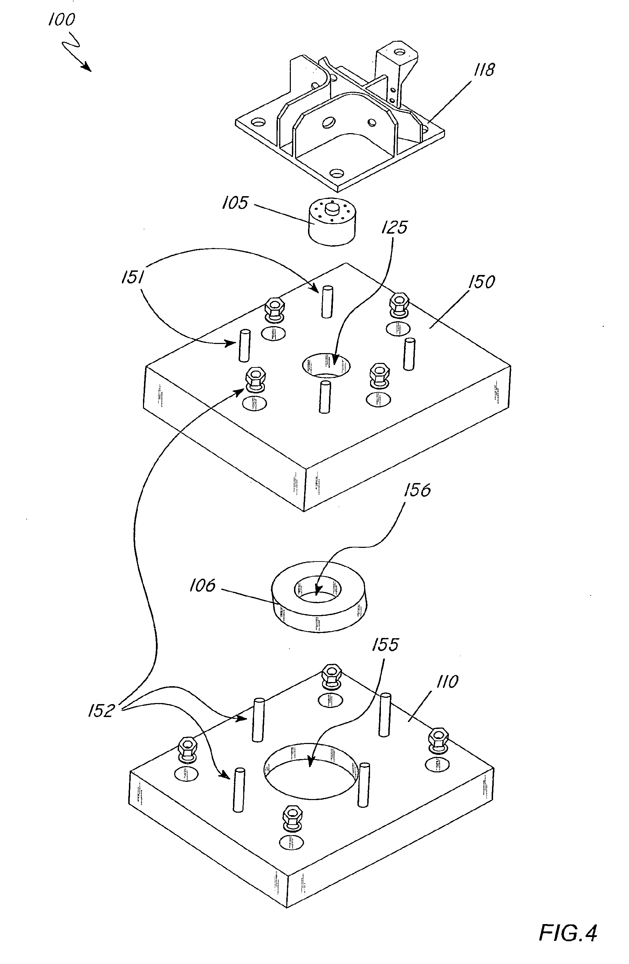

A variant embodiment of the invention will be now described, with reference to FIG. 4, where the device is generally designated by numeral 100.

In this case, the device 100 does not include a third plate like the one of the previous embodiment, but a fourth plate 150 interposed between the first plate 110 and the second plate 118.

Particularly, the fourth plate 150 is associated with the second plate 118 via second connection means 151 which are adapted to only allow them to move towards/away from each other to a predetermined minimum extent in an axial direction orthogonal to their extension and lying plane.

Also, the fourth plate 150 is associated with the first plate 110 via third connection means 152, which are designed to allow them to move to a predetermined extent in any direction substantially parallel to the extension and lying plane of the first 110 and fourth 150 plates.

In this case, the first detection means 105 are interposed between the second 118 and the fourth 150 plates and the second detection means 106 are associated with the first plate 110.

Particularly, the fourth plate 150 has a first cavity 125 which may also be replaced, in other embodiments, by a through hole, which at least partially accommodates the first detection means 105 so that, like in the previous case, they are protected from any damage caused by excessive compressive forces.

Concerning the second detection means 106, these are at least partially received in a second cavity 155. Furthermore, the fourth plate 150, the first detection means 105 and the second detection means 106 have mutually engageable projections and recesses.

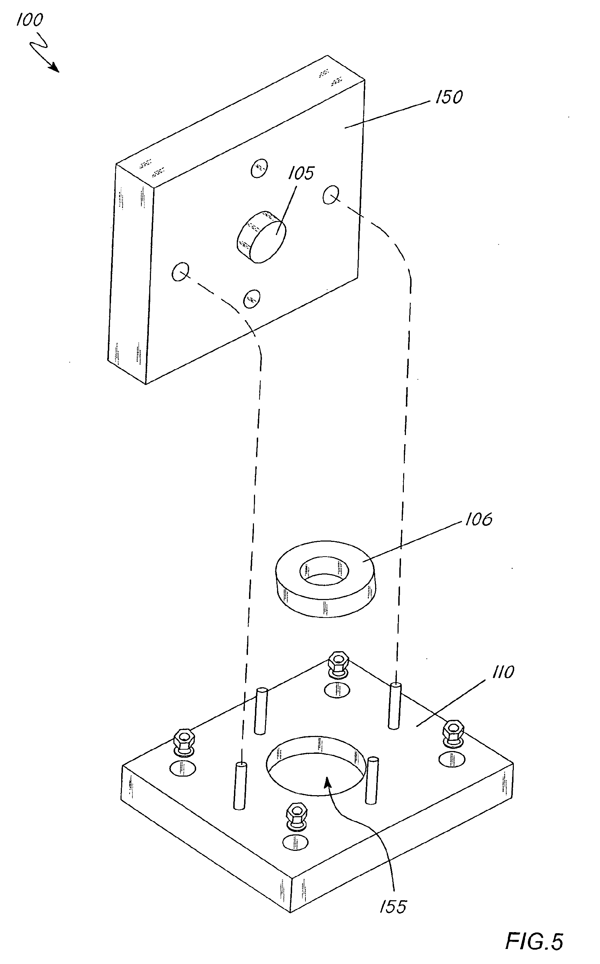

An exemplary embodiment of these mutually engaged projections and recesses is shown in Fig. 5, where the first detection means 105 are shown to project out of the fourth plate 150 and to engage in a through hole 156 formed in the second detection means 106, which are integral with the first plate 110.

This arrangement also has to be intended without limitation and may be replaced by projections of the second detection means and recesses of the fourth plate.

In other embodiments, the detection means may be inverted, i.e. the second detection means are associated with the fourth plate and the first detection means are interposed between the first plate and the fourth plate.

Thus, advantageously, any motion of the fourth plate 150 relative to the first plate 110, caused by shear forces, will be transduced into a force that is transferred from the fourth plate 150, with which the first detection means 105 are associated, to the second detection means 106 which will measure its intensity.

Referring to the second attachment means 151, these may be constructed exactly like the first attachment means 19 as described with reference to the preferred embodiment.

On the other hand, the third attachment means 152 might only include the pins projecting out of the surface of the first plate 110 facing towards the fourth plate 150 and their respective bolts.

Concerning the detection means, in all the above embodiments these may preferably but not necessarily consist of load cells. These cells may be operably connected to the data collection means, generally consisting of a computer, for storage and processing of the received signals and for providing the measurement of the detected forces.

According to another aspect, the invention relates to a protection barrier B equipped with a measuring device as described in any one of the above alternative variants, reference being entirely made thereto.

It will be appreciated that such barrier B has the advantage of providing instantaneous and real measurements of all the shear and tractive/compressive forces exerted between the foundation F and the interface element 2, not only during the crash test, but also during use. This will allow constant and effective monitoring of any event concerning the barrier B.

In operation, once the protection barrier B has been designed and fabricated, it will be installed in a suitable land selected for the crash test.

Then, a number of events, such as rockfalls, debris flows, snow slides, avalanches, are artificially generated, and the values of the forces acting on the interface elements 2 between the barrier B and the foundations F are read from the data collection means upon reception of the signals from all detection means 5, 6.

Based on these values, the designer can confirm the parameters for the selection of the materials to be used for the protection barrier B and the sizes of the parts of the barrier B. Furthermore, these force values may be used to appropriately select the size of the foundations F.

The above description clearly shows that the measuring device and the protection barrier of the invention fulfill all the intended objects.

Particularly, it shall be noted that the measuring device of the invention allows detection of stresses on a protection barrier by direct measurement of the forces acting upon the interface elements between the barrier posts and the foundations.

The device also fulfills the object of providing a measuring device for detecting stresses on a protection barrier that allows simultaneous measurement of all the real forces that act on the interface elements, namely the shear forces and the compressive/tractive forces.

A number of additional variant embodiments, other than those mentioned above, may be envisaged upon implementation of the measuring device and rock fall protection barrier of the invention. As long as these variants are covered by the following claims, although not shown and illustrated herein, they shall be intended to fall within the scope of the present invention.

## Claims

1. A measuring device for detecting impact stresses on a protection barrier (B), wherein the barrier (B) comprises a plurality of posts (M) adapted to support at least one substantially flexible retainer element (R) for collecting falling material, and wherein each post (M) is designed to be associated with at least one foundation (F) for anchorage to a stationary support (S), **characterized in that** it comprises, for each post (M), at least one interface element (2), which is designed to be anchored to the upper end (3) of the foundation (F) and to the lower end (4) of the post (M), first detection means (5; 105) being associated with said interface element (2) for measuring the compressive/tractive forces acting upon the post (M) in a substantially axial direction, second detection means (6; 106) being associated with said interface element (2) for measuring the shear stresses acting upon the post (M) in a substantially transverse direction, and means for collecting data from said first (5; 105) and said second (6; 106) detection means, for instantaneous detection of the multi-axial stress state of the corresponding post (M) upon impact.

2. A measuring device as claimed in claim 1, **characterized in that** said interface element (2) comprises at least one first plate (10; 110) designed to be associated (4) with the lower end (4) of said post (M) via first connection means (11) and a plurality of attachment bars (14) integral with the foundation (F), with their free ends (15) interacting with said first plate (10; 110).

3. A measuring device as claimed in claim 2, **characterized in that** said first connection means (11) include a second plate (18; 118) extending in a plane substantially parallel to that of said first plate (10; 110) and rigidly fastened to the post (M) by screw means or the like.

4. A measuring device as claimed in claim 3, **characterized in that** said first plate (10) and said second plate (18) are mutually coupled by first attachment means (19) which are adapted to allow said first (10) and said second (18) plates to move towards/away from each other to a predetermined extent in an axial direction, substantially orthogonal to said plates (10, 18), said first detection means (5) being interposed between said first (10) and said second (18) plates.

5. A measuring device as claimed in any claim from 2 to 4, **characterized in that** said interface element (2) has at least one third plate (12) which is stably fixed to the foundation (F) via a plurality of attachment bars (14).

6. A measuring device as claimed in claim 5, **characterized in that** said third plate (12) is equipped with second connection means (13) for attachment to said first plate (10), said first detection means (5) being associated to said first plate (10) and said second detection means (6) being associated to said third plate (18).

7. A measuring device as claimed in claim 6, **characterized in that** said first detection means (19) comprise pins (20) projecting from the surface of said first plate (10) and having free ends inserted in respective through holes (21) of said second plate (18) for engagement of bolts (22), elastic means being interposed between said first (10) and said second (18) plates for counteracting said movements thereof towards/away from each other.

8. A measuring device as claimed in claim 6 or 7, **characterized in that** said first plate (10) has a cavity (25) for at least partially accommodating said first detection means (5).

9. A measuring device as claimed in any preceding claim, **characterized in that** said first plate (10) has a plurality of through holes (26) in which the free ends (15) of said attachment bars (14) are guided to allow transverse movements of predetermined amplitude of said first plate (10) in a direction substantially parallel to the extension plane of said first plate (10).

10. A measuring device as claimed in any claim from 6 to 9, **characterized in that** said second connection means (13) include a plurality of connecting rods (27) having first ends attached to said first plate (10) and second ends attached to said third plate (12) with the interposition of said second detection means (6), said third plate (12).

11. A measuring device as claimed in any claim from 6 to 10, **characterized in that** it comprises a first plate (10) and a pair of third plates (12) each having second connection means (13) for connection to said first plate (10) oriented substantially orthogonal to each other.

12. A measuring device as claimed in claim 4, **characterized in that** it has a fourth plate (150) interposed between said first plate (110) and said second plate (118) and attached to the latter via second connection means (151) which are adapted to allow said fourth (150) and second (118) plates to move towards/away from each other in a direction substantially orthogonal to the common extension plane of said plates (118, 150).

13. A measuring device as claimed in claim 11 or 12, **characterized in that** said fourth plate (150) is associated with said first plate (110) via third attachment means (152) which are adapted to allow said fourth (150) and first (110) plates to move towards/away from each other to a predetermined extent in any direction defined by the extension plane of said first (110) and said fourth (150) plates.

14. A measuring device as claimed in any claim from 11 to 13, **characterized in that** said first detection means (105) are interposed between said second (118) and said fourth (150) plates and are at least partially accommodated in a first cavity (125) of the latter, said second detection means (106) being at least partially accommodated in a second cavity (155) of said first plate (110).

15. A measuring device as claimed in claim 15 or 16, **characterized in that** said fourth plate (150) has projections and recesses adapted for mutual engagement, wherein said recesses include at least one through hole (156) formed in said second detection means (106) and adapted to engage a respective projection of said fourth plate (150) with said first detection means (105) and said projections consist of a portion of said first detection means (105) that projects out of said fourth plate (150).

16. A protection barrier comprising one or more posts (M) adapted to support at least one substantially flexible element (R) for retaining falling material, and wherein each post (M) is designed to be associated with a foundation (F) for anchorage to a stationary support (S), **characterized in that** at least one of said posts comprises at least one device (1; 100) for detecting multi-axial stresses as claimed in one or more of the preceding claims.
